(19) **Europäisches Patentamt**

**European Patent Office**

**Office européen des brevets**

(11) **EP 1 142 627 B1**

(12) **EUROPEAN PATENT SPECIFICATION**

(45) Date of publication and mention
of the grant of the patent:
**05.01.2005 Bulletin 2005/01**

(51) Int Cl.⁷: **B01D 53/46**, B01D 53/50

(21) Application number: **01111711.6**

(22) Date of filing: **15.03.1996**

(54) **Combustion exhaust gas treatment apparatus and method**

Vorrichtung und Verfahren zur Behandlung von Abgasen aus Verbrennungsanlagen

Dispositif et procédé pour le traitement des gaz de combustion

(84) Designated Contracting States:
**DE DK ES GB IT**

(30) Priority: **30.05.1995 JP 13199195**
**30.03.1995 JP 7277995**

(43) Date of publication of application:
**10.10.2001 Bulletin 2001/41**

(62) Document number(s) of the earlier application(s) in
accordance with Art. 76 EPC:
**96104165.4 / 0 734 754**

(73) Proprietor: **MITSUBISHI JUKOGYO KABUSHIKI
KAISHA
Tokyo-to, 100 (JP)**

(72) Inventors:
• **Shimizu, Taku**
**Chiyoda-ku, Tokyo (JP)**
• **Kimura, Kazuaki**
**Chiyoda-ku, Tokyo (JP)**
• **Okazoe, Kiyoshi**
**Chiyoda-ku, Tokyo (JP)**
• **Tatani, Atsushi**
**Chiyoda-ku, Tokyo (JP)**
• **Ukawa, Naohiko,**
**Hiroshima Research & Dev. Center
Nishi-ku, Hiroshima-shi, Hiroshima-ken (JP)**
• **Hino, Masao, Hiroshima Research & Dev. Center
Nishi-ku, Hiroshima-shi, Hiroshima-ken (JP)**
• **Okino, Susumu,**
**Hiroshima Research & Dev. Center
Nishi-ku, Hiroshima-shi, Hiroshima-ken (JP)**
• **Haruki, Takashi,**
**Hiroshima Research & Dev. Center
Nishi-ku, Hiroshima-shi, Hiroshima-ken (JP)**
• **Takashina, Toru,**
**Hiroshima Research & Dev. Center
Nishi-ku, Hiroshima-shi, Hiroshima-ken (JP)**
• **Ochi, Eiji**
**Chiyoda-ku, Tokyo (JP)**

(74) Representative: **Behrens, Dieter, Dr.-Ing.
Wuesthoff & Wuesthoff
Patent- und Rechtsanwälte
Schweigerstrasse 2
81541 München (DE)**

(56) References cited:
**EP-A- 0 285 023**      **GB-A- 1 382 232**
**US-A- 5 192 514**

**Description**

FIELD OF THE INVENTION AND RELATED ARTS

The present invention relates to a combustion exhaust gas treatment apparatus and more particularly to a combustion exhaust gas treatment apparatus capable of easily removing selenium (Se) from combustion exhaust gas containing Se components, and making harmless the Se components.

Hitherto, a combustion exhaust gas treatment apparatus installed in a thermal power plant or the like, comprises a dust collector (usually an electrostatic precipitator) for removing fly ash and other dust from the combustion exhaust gas, and combustion exhaust gas desulfurization apparatus for absorbing sulfurous acid in the combustion exhaust gas is generally employed.

Moreover, conventionally, as the combustion exhaust gas treatment apparatus installed in a thermal power plant or the like, a combustion exhaust gas treatment apparatus is generally employed which comprises a dry dust collector (usually an electrostatic precipitator) for removing fly ash and other dust from the combustion exhaust gas, and a wet combustion exhaust gas desulfurization apparatus for absorbing sulfurous gas in the combustion exhaust gas by contacting it with an absorbent slurry (for example, slurry containing calcium compound) in an absorption column and separating and recovering gypsum as byproduct from the slurry in the absorption column.

Recently, handling of harmful impurities contained in the combustion exhaust gas aside from sulfur oxides is posing a problem. In particular, in the combustion exhaust gas treatment apparatus for coal fired boilers, the harmfulness of selenium (Se) contained at a maximum level of about 10 mg/kg in coal is a problem lately, and its harmless treatment is demanded.

Meanwhile, Se exists as tetravalent Se (main form: selenious acid $SeO_3^{2-}$) which is easy to treat by making it insoluble by a treating agent, and hexavalent Se (main form: selenic acid $SeO_4^{2-}$) which is hard to treat by making it insoluble, and in particular the hexavalent Se is high in solubility (solubility at 20°C is 95 %) and is easy to elute. Besides, this Se has a toxicity similar to that of arsenic compound, and disaster cases and emission regulations are known overseas, and it is newly added to the list of regulated items also in Japan, and is controlled by the environmental standard (0.01 mg/liter), discharge standard (0.1 mg/liter), and elution standard in landfill (0.3 mg/liter).

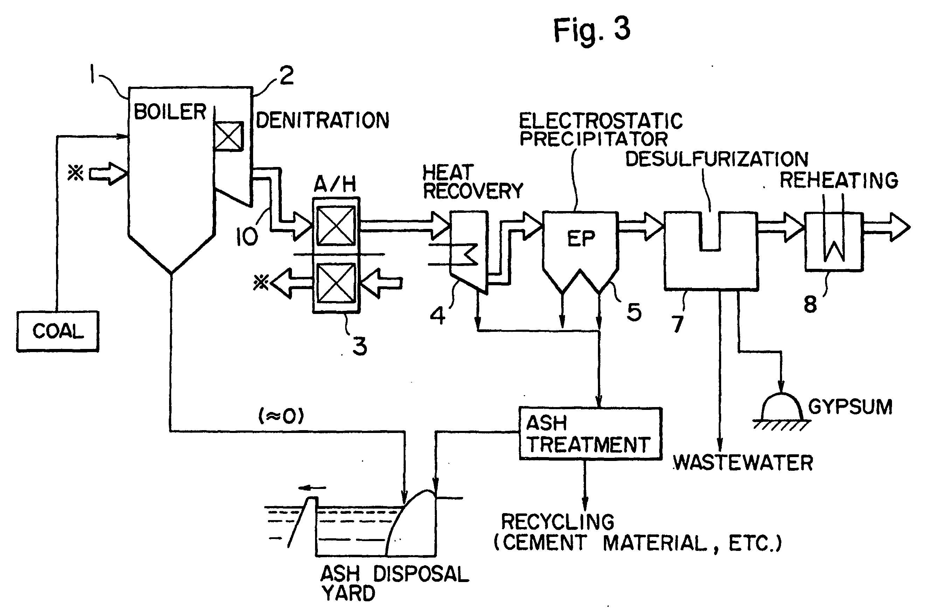

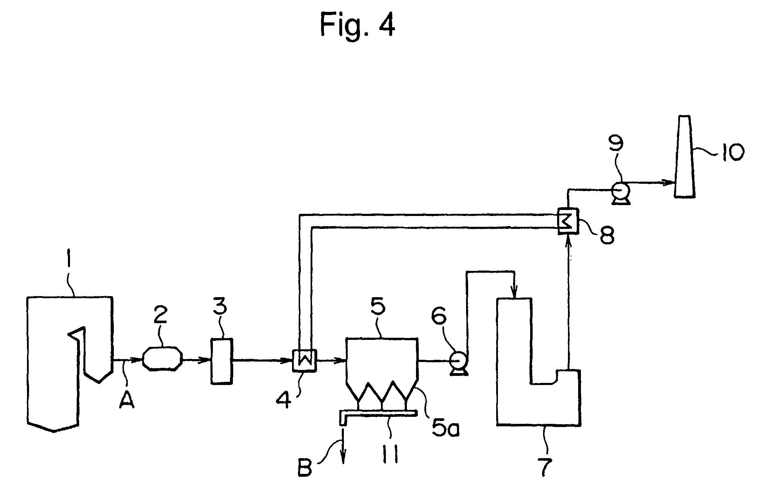

Fig. 3 shows an example of prior art of combustion exhaust gas treatment apparatus of this type (an example of combustion exhaust gas treatment apparatus for coal fired boiler). In Fig. 3 and Fig. 4, the combustion exhaust gas A emitted from a coal fired boiler 1 is sent into a denitration apparatus 2 installed downstream of the boiler 1 to be rid of nitrogen oxides (NOx), and passes through an air heater 3 and a heat recovery unit 4 of gas-gas heater (GGH), and is introduced into an electrostatic precipitator (EP) 5, in which fly ash and dust are removed. In succession, the combustion exhaust gas is guided into a wet combustion exhaust gas desulfurization apparatus 7 by a fan 6, and sulfurous gas is removed in this desulfurization apparatus 7, and after passing through a reheater 8 of the gas-gas heater (GGH), it is led into a stack 10 by a fan 9, and is released into the atmosphere through the stack 10 (Fig. 4).

On the other hand, fly ash and dust removed in the electrostatic precipitator 5 are discharged from plural hoppers 5a (dust recovery units) formed in the electrostatic precipitator 5, and are conveyed and collected in batch by a conveyor 11. Thus collected dust B is either recycled as cement material or the like, or discarded in an ash disposal yard (Fig. 3).

Herein, the desulfurization apparatus 7 comprises an absorption column, for example, in which combustion exhaust gas is introduced, and by contact of combustion exhaust gas with absorbent slurry (usually slurry containing calcium compound) in this absorption column, the sulfurous acid in the combustion exhaust gas is. absorbed in wet process, and usually from the slurry in the absorption column, gypsum is separated and collected as byproduct.

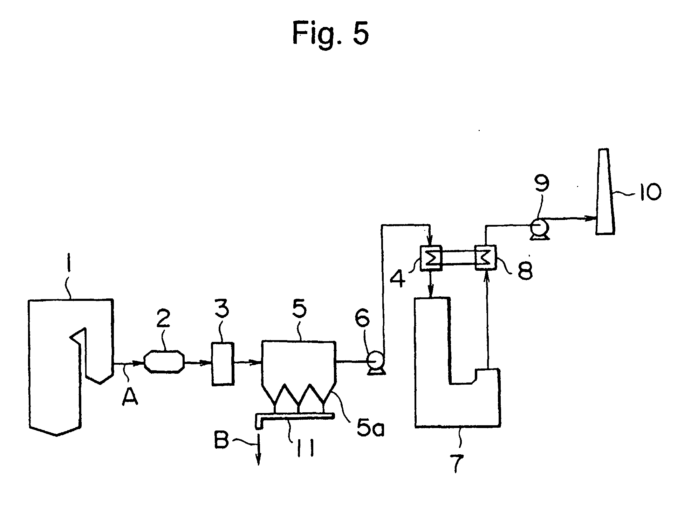

Incidentally, the heat recovery unit 4 of the gas-gas heater (GGH) may be also disposed immediately before the desulfurization apparatus 7 as shown in Fig. 5.

In these combustion exhaust gas treatment apparatuss, most of Se in coal (Se in combustion exhaust gas) is condensed at the downstream side of the air heater 3 (that is, the position before introduction into the electrostatic precipitator 5), and is removed by the electrostatic precipitator 5 in a state being contained in the dust in combustion exhaust gas, and is directly mixed in the refuse in the ash disposal yard or in the cement material. To render Se harmless by conforming to the elution standard, it requires a complicated and costly aftertreatment of, for example, diluting the ash removed by the electrostatic precipitator 5 in a huge volume of water.

British Patent 1,382,232 describes a process for the recovery of selenium from waste combustion gas, particularly the waste gas from a glass melting furnace. Waste gases discharged from such furnaces contain a selenium component in the form of elemental selenium or a compound such as selenium dioxide. The selenium component is toxic and must be separated out and recovered in order to prevent atmospheric pollution. In order to achieve this separation a process is proposed which comprises a first step of contacting the waste gas having been cooled to about 250 - 300°C, with an aqueous absorption solution comprising an alkali metal sulfite and/or an alkali metal bisulfite in an absorption tower so that at least a part of the selenium component is absorbed and the humidity of the gas is increased. The process further comprises a second step of passing the waste gas treated in the first step through a glas fiber filter (demister) kept in a moist condition to collect at least some of the remaining elemental selenium and selenium compound on the filter, and in a third step acid, alpha acid $H_2SO_4$, is added to the absorption solution discharged from the first and second steps so as to reduce the selenium component dissolved in the absorption solution to elemental selenium which is precipitated from the solution and the elemental selenium so precipitated is recovered.

A method for separating mercury and selenium from roasting gases from roasting zinc concentrates is described in Erzmetall, 30(1977)12, pp 555-604. The method for separating mercury and selenium from exhaust gas includes introducing the exhaust gas from the roasting furnace for Zn-concentrate to a boiler, cooling and then separating the dust treated with an electric dust collector. For separating selenium calcium carbonate, $CaCO_3$, is added into the rinsed precipitate and then mercury is separated and subsequently water, $H_2SO_4$ and $SO_2$ are added. Such exhaust gas from the roasting furnace is different from combustion gas, especially of a thermal power plant.

US-patent specification 5,192,514 discloses a method for removing gaseous selenium from a flue gas by injecting an effective amount of ammonia into the flue gas to produce a solid selenium reaction product (dustcake). This product is removed from the flue gas by deposition in a fabric filter which then may be cleaned by conventional methods (reverse-gas, shake-deflate, or pulse-jet cleaning).

A combustion exhaust treatment apparatus for treating combustion exhaust gas containing dust and arsenic components is described in EP 0 285 023 A1. Connected from a fire furnace it comprises a denitrating reactor for denitrating the combustion exhaust gas discharged from the fire furnace, a dust collector for collecting solid particles as fly ash in the exhaust gas and a transport pipe for circulating the solids collected by the dust collector through the fire furnace. The transport pipe is provided with an arsenic removal means which can be formed by a heating device such as an electric oven in which the fly ash or dust particles are heated up to 1000°C or more to gasify the arsenic components. These are thus inhibited from concentrating in the combustion exhaust gas and therefore a catalyst in the denitrating reactor can be prevented from deteriorating whereby the efficiency of the denitration can be kept up.

## OBJECTS AND SUMMARY OF THE INVENTION

In the light of the prior art, it is an object of the invention to present a combustion exhaust gas treatment apparatus capable of more easily and less expensively removing and making harmless harmful material, especially the Se components contained in combustion exhaust gas to the extent necessary to meet generally adopted environmental standards for the purity of combustion exhaust gas, in particular of thermal power plants.

The invention achieving this object and its preferred embodiments are defined in the appended claims.

The invention presents a combustion exhaust gas treatment apparatus capable of easily making harmless the Se contained in the combustion exhaust gas.

A combustion exhaust gas treatment apparatus for removing harmful matter in combustion exhaust gas, comprising means for cooling combustion exhaust gas to 350°C or less, dust collecting means for separating dust in the combustion exhaust gas, mixing means for adding and mixing Se elution preventive agent and humidifying liquid or solution of Se elution preventive agent only to the dust of smaller particle size sorted from the dust of larger particle size, and means for forming the dust mixed with the Se elution preventive agent and humidifying agent or solution of Se elution preventive agent by the mixing means into scale form.

In a combustion exhaust gas treatment apparatus, which is the subject of European patent application 96 104 165.4 of the present applicant, most of the Se in the combustion exhaust gas is condensed as being cooled by the cooling means, and is removed by the dust collecting means in a state being contained in the dust. In consequence, the Se elution preventive agent and humidifying liquid or solution of Se elution preventive agent are added by the mixer to the dust separated by the dust collecting means, and the existent form of the Se in dust is transformed into an insoluble compound. Accordingly, if the dust is discarded same as in the prior art, the Se elution standard is satisfied, and the Se is made harmless easily without requiring complicated aftertreatment. Still more, because of the constitution of adding humidifying liquid, Se elution preventive agent or solution of Se elution preventive agent, and mixing the dust and Se elution preventive agent, or further forming the mixture into scale, as compared with the constitution of forming the dust into slurry and mixing Se insoluble treating agent and the separating into solid and liquid and discarding, it does not require large equipment or apparatus for wastewater (filtrate) treating facility or solid-liquid separator, and handling in disposal of dust is much easier.

By making insoluble only the dust of smaller particle size separated and collected from the specific recovery unit at the outlet side of the combustion exhaust gas or from ag/classifying means by introducing into the mixing means, the required amount of Se elution preventive agent and capacity of mixing means and scale forming means can be reduced, and the Se is made harmless easily and at low cost.

That is, according to the study by the present inventors, it is known that more Se is contained (deposited) in the smaller particle size dust (ash) separated and collected, and the Se is made harmless on the whole only by applying insoluble treatment on the dust of smaller particle size and the Se is made harmless more easily and economically.

BRIEF DESCRIPTION OF THE DRAWINGS

Fig. 1 is a diagram showing an essential constitution of a combustion exhaust gas treatment apparatus in embodiment 1 of the invention.

Fig. 2 is a diagram showing an essential constitution of a combustion exhaust gas treatment apparatus in embodiment 2 of the invention.

Fig. 3 is a schematic structural diagram showing an example of a conventional combustion exhaust gas treatment apparatus.

Fig. 4 is a schematic structural diagram showing other example of a conventional combustion exhaust gas treatment apparatus.

Fig. 5 is a schematic structural diagram showing a different example of a conventional combustion exhaust gas treatment apparatus.

DETAILED DESCRIPTION OF THE PREFERRED EMBODIMENTS

Referring now to the drawings, embodiments of the invention are described below.

(Embodiment 1)

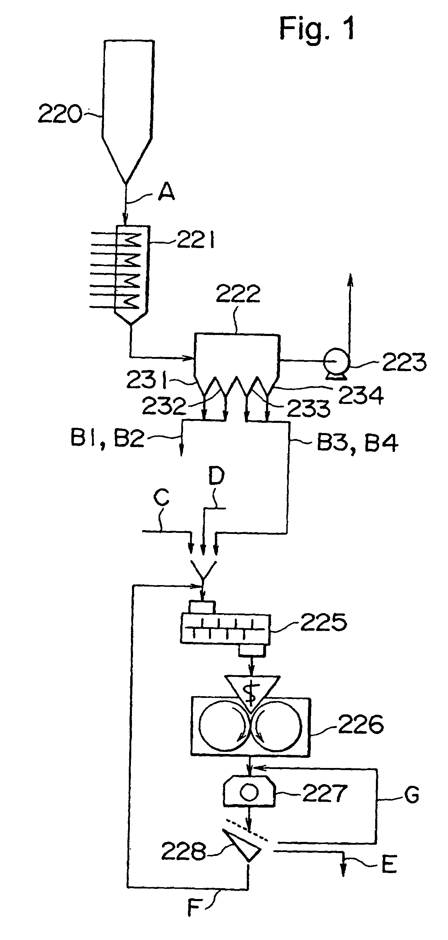

Fig. 1 is a diagram showing an essential structure of a combustion exhaust gas treatment apparatus in embodiment 1 of the invention. This combustion exhaust gas treatment apparatus comprises, as shown in Fig. 1, a cooler 221 (cooling means) for cooling combustion exhaust gas A exhausted from a coal fired boiler 220, an electrostatic precipitator 222 (dust collecting means, sorting means) disposed downstream of the cooler 221, for collecting dust such as fly ash in the combustion exhaust gas A, and separating from the combustion exhaust gas, and a fan 223 for supplying the combustion exhaust gas (being rid of dust) discharged from the electrostatic precipitator 222 to a later process.

At the dust discharge side of the electrostatic precipitator 222, there are, as sequentially arranged, a mixer 225 (mixing means) for adding and mixing Se elution preventive agent C and humidifying liquid D to the dust, a briquetting machine 226 (scale forming means) for forming the dust discharged from the mixer 225 into scale, a granulator 227 (granulating means) for granulating the scale formed dust (scale dust) formed by the briquetting machine 226 into a size suited to handling, and a screen 228 (sorting means) for screening a proper size of the scale dust granulated by the granulator 227.

Moreover, a desulfurization apparatus for removing sulfurous acid from the combustion exhaust gas sent by the fan 223 may be provided same as in the prior art shown in FIGS. 24 to 26. Besides, as a matter of course, the conventional air heater or gas-gas heater may be function as the cooler 221.

Of the scale dust sorted by the screen 228, scale dust E of proper size may be directly discarded or recycled, and smaller scale dust F is put back into the mixer 225, and larger scale dust G is sent again into the granulator 227.

The cooler 221 is to set the outlet gas temperature, for example, in a range of 150 to 400°C, and the temperature may be set so that the combustion exhaust gas may be cooled to the temperature for sufficiently condensing the Se in the combustion exhaust gas. Specifically, the temperature is set so as to cool the combustion exhaust gas to 350°C or less, or preferably 310°C or less.

The electrostatic precipitator 222 has plural hoppers 231 to 234 (recovery units) for separating and collecting dust, and these hoppers 231 to 234 are formed sequentially from the inlet side (upstream side) to the outlet side (downstream side) of the combustion exhaust gas, and in such constitution, dust of larger particle size is collected from the inlet side hopper, and dust of smaller particle size is collected from the outlet side hopper.

In this case, only the dust B3, B4 separated and collected from the specific hoppers 233, 234 at the outlet side of the combustion exhaust gas, out of the plural hoppers 231 to 234 in the electrostatic precipitator 222, are led into the mixer 225 to make Se insoluble, while the remaining dust B1, B2 are discarded directly.

The mixer 225 has the function of, in this case, mixing and discharging the charged dust, Se elution preventive agent C, and humidifying liquid D, and is provided with, for example, agitation blades inside for sending out the charged matter to the discharge side while agitating it.

Herein, as the Se elution preventive agent, a chemical reacting with Se to make it insoluble is necessary, and , for example, $FeCl_3$ or $Fe_2(SO_4)_3$ may be used if at least tetravalent Se (main form: selenious acid $SeO_3^{2-}$) is contained among Se components to be removed.

If there is hexavalent Se (main form: selenic acid $SeO_4^{2-}$) in the combustion exhaust gas and it must be made insoluble in order to conform to the elution standard, a reducing agent for transforming hexavalent Se into tetravalent Se may be added as treating agent, together with the above chemical. As the reducing agent, for example, sulfurous acid water obtained by blowing $SO_2$ into water may be preferably used. When the wet desulfurization apparatus is installed at the same time, it is preferred to absorb $SO_2$ by the desulfurization apparatus, and extract and use the slurry or circulation water containing unreacted sulfurous acid.

The charging amount of the Se elution preventive agent C may be set slightly more than the stoichiometric equivalent for making Se in the dust completely insoluble determined from the reaction formulas (1), (2), or (3), (4).

As the humidifying liquid D, aside from ordinary industrial water, the slurry or circulation water of the desulfurization apparatus may be used, and its charging amount may be a minimum required level for the ease of handling of dust or for compacting and forming into scale. For example, when the dust amount is 15 t/h, $FeCl_3$ may be charged by about 150 kg/h, and humidifying water about 0.79 t/h. Herein, as the humidifying liquid, by absorbing $SO_2$ in the desulfurization apparatus, the slurry or circulation water containing unreacted sulfurous acid may be used, and the dissolved sulfurous acid may act as reducing agent for reducing the hexavalent Se into tetravalent Se.

Instead of adding the Se elution preventive agent C by charging together with the humidifying liquid D, it may be preliminarily mixed in a solution and added. In such a case, the solution concentration is preferred to be about 0.05 to 5 wt.%, and the loading may be about 0.5 to 10 wt.% to the dust. By so setting, most of Se is made insoluble, and the dust may be handled easily without discharge of filtrate, and it may be smoothly compacted and formed into scale.

In thus constituted combustion exhaust gas treatment apparatus, dust removal treatment and harmless treatment of Se much contained in dust are executed in the following procedure.

The combustion exhaust gas A released from the boiler 220 is first cooled to 350°C or less by the cooler 221, and therefore at least at the downstream side of the cooler 221, the Se in combustion exhaust gas is condensed, and mostly deposits on the ash which forms the dust in the combustion exhaust gas. This dust is separated and collected by the electrostatic precipitator 222, and the dust B1, B2 separated and collected from the specific hoppers 231, 232 at the inlet side of the combustion exhaust gas are directly discarded, while only the dust B3, B4 separated and collected from the specific hoppers 233, 234 at the outlet side of the combustion exhaust gas are fed into the mixer 225.

In the mixer 225 or subsequent briquetting machine 226, the tetravalent Se (main form: selenious acid $SeO_3^{2-}$) contained in the charged dust reacts with the Se elution preventive agent ($FeCl_3$ or $Fe_2(SO_4)_3$) as shown in the following reaction formulas (1), (2), or (3), (4), and is made insoluble in a form of iron selenite ($Fe_2(SeO_3)_3$).

When hexavalent Se (main form: selenic acid $SeO_4^{2-}$) is present, the reducing agent as mentioned above is charged, and this hexavalent Se reacts with the reducing agent to be tetravalent Se, which similarly reacts as shown in the following reaction formulas (1), (2), or (3), (4) to be insoluble.

$$FeCl_3 \rightarrow Fe^{3+} + 3Cl^- \downarrow \tag{1}$$

$$2Fe^{3+} + 3SeO_3^{2-} \rightarrow Fe_2(SeO_3)_3 \downarrow \tag{2}$$

or

$$Fe_2(SO_4)_3 \rightarrow 2Fe^{3+} + 3SO_4^{2-} \tag{3}$$

$$2Fe^{3+} + 3SeO_3^{2-} \rightarrow Fe_2(SeO_3)_3 \downarrow \tag{4}$$

Accordingly, most of Se is made insoluble and mixed in the scale dust E as iron selenite. Therefore, if the scale dust E may be directly discarded in the ash disposal yard, the elution standard can be satisfied. Besides, the dusts B1, B2 separated and collected from the specific hoppers 231, 232 of the electrostatic precipitator 222 are low in Se concentration, and if directly discharged in the ash disposal yard, the elution standard is satisfied.

As described herein, according to the combustion exhaust gas treatment apparatus of embodiment 1, without requiring complicated aftertreatment of the prior art, the Se in combustion exhaust gas can be removed together with dust, and finally most of it is made insoluble and present in the scale dust E so as to be discarded directly. Still more, because of the constitution for adding a humidifying liquid to mix the dust and Se elution preventive agent, and forming into scale, as compared with the constitution for forming the dust into slurry, mixing insoluble treating agent, and separating into solid and liquid to discard, it does not require large-scale equipment or facility such as wastewater (filtrate) treatment apparatus and solid-liquid separator, and handling of dust in waste disposal is much easier. If not particularly needed in waste disposal, the scale forming process may be omitted, so that the apparasus may be further simplified.

In this case, moreover, only the dust B3, B4 separated and collected from the specific hoppers 233, 234 at the outlet side of the combustion exhaust gas are presented to Se insoluble treatment, and therefore the required amount of Se elution preventive agent C, and required capacity of the mixer 225 (mixing means) and briquetting machine 226 (scale forming means) can be reduced, and the Se is made harmless more easily and inexpensively. That is, as mentioned above, since more Se is contained (deposited) on the dust (ash) of smaller particle size separated and collected from the specific recovery unit at the outlet side, only by applying the insoluble treatment on the dust of smaller particle size, the Se is made harmless on the whole, thereby contributing to reduction of facility cost and running cost.

The result of dust collecting experiment by using the electrostatic precipitator in the apparatus of Fig. 1 is described below. In the experiment, coal containing 3 mg/kg of Se was supplied in a combustion furnace at a rate of 25 kg/h, and combustion exhaust gas exhausted from the combustion furnace at a rate of 200 m$^3$ N/h was cooled to 150°C, and fed into the electrostatic precipitator. In this case, more than 99% of the dust was captured by the electrostatic precipitator (Se capturing rate about 99.4%), and the total amount of dust collected from the hoppers was 3.4 kg/h. The discharge amount of dust (collected ash) collected from the hoppers 231, 232, or 233, 234, the mean particle size, and eluting Se concentration are shown in Table 1. Herein, the eluting Se concentration refers to the concentration of Se in the dust analyzed according to the elution test and atomic absorption method conforming to the ordinance No. 13 of Environmental Agency of Japan, and it shows the amount of Se contained in the dust and eluting in the elution test.

## Table 1

| Item | Collected ash discharged from hoppers 231, 232 (combustion exhaust gas inlet side) | Collected ash discharged from hoppers 233, 234 (combustion exhaust gas outlet side) |
|---|---|---|
| Discharge amount (kg/h) | 2.27 | 1.14 |
| Mean particle size of collected ash | 12 | 5 |
| Selenium eluting concentration in collected ash (mg/liter) | 0.20 | 0.49 |

More specifically, the discharge amount of the dust B3, B4 separated and collected from the hoppers 233, 234 at the outlet side of the combustion exhaust gas was slight, 1.14 kg/h, but the eluting Se concentration was 0.49 mg/liter, high above the landfill standard (0.3 mg/liter). On the other hand, the discharge amount of the dust B1, B2 separated and collected from the hoppers 231, 232 at the inlet side of combustion exhaust gas was large, 2.27 kg/h, but the eluting Se concentration was 0.20 mg/liter, far below the standard. Accordingly, it is known that the dust B1, B2 separated and collected from the hoppers 231, 232 at the inlet side of the combustion exhaust gas can be directly discarded. That is, Se insoluble treatment is not needed in the dust at the inlet side of the combustion exhaust gas which is about twice larger in the discharge amount, and hence it is evident that the required amount of the Se elution preventive agent C and the required capacity of the mixer 225 can be substantially saved.

Incidentally, such difference in eluting Se concentration is regarded to be due to the particle size of dust (ash). That is, when gaseous Se ($SeO_2$) is condensed and deposits on the surface of the ash forming the dust, ash of smaller particle size is greater in the specific surface area per unit weight, and hence more Se deposits. On the other hand, in the dust collector such as the electrostatic precipitator mentioned above, coarse ash particles are likely to be captured at the inlet side of the combustion exhaust gas, and fine ash particles are likely to be captured at the outlet side of the combustion exhaust gas, and in other words there is a sorting function, and it is hence considered that the eluting Se concentration is high in the dust captured at the outlet side of the combustion exhaust gas.

(Embodiment 2)

As other embodiment of the invention, embodiment 2 is described below. Same constituent elements as in embodiment 1 are identified with same reference numerals and their explanations are omitted.

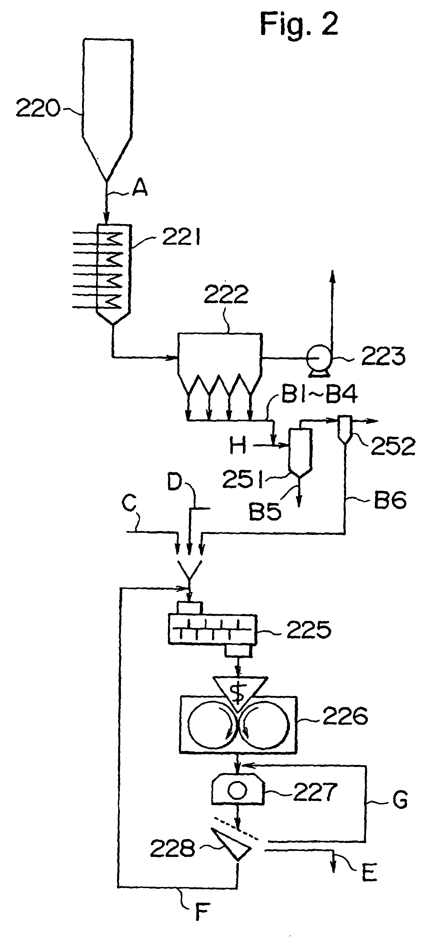

Fig. 2 shows an essential structure of a combustion exhaust gas treatment apparatus of embodiment 2. The combustion exhaust gas treatment apparatus of this embodiment comprises a sorter 251 (sorting means) for classifying the dust B1 to B4 captured by the electrostatic precipitator 222 and conveyed in batch into large particle size (coarse ash) B5 and small particle size (fine ash) B6, and only fine ash B6 sorted by the sorter 251 is captured by a fine particle capturing apparatus 252, and fed into a mixer 225 to make Se insoluble. In this case, the dust B1 to B4 conveyed in batch are conveyed by air H and led into the sorter 251. The sorter 251 may be constituted by, for example, a cyclone, and it is convenient when it is designed to adjust the degree of sorting. As the fine particle capturing apparatus 252, in this case, a bag filter is used.

In this case, only the fine ash B6 is subjected to Se insoluble treatment, and same as in embodiment 1, therefore, the required amount of Se elution preventive agent C and required capacity of mixer 225 can be reduced, so that the Se may be made harmless more easily and inexpensively.

In this combustion exhaust gas treatment apparatus, only by adding the mixer 225 and sorter 251 to the conventional combustion exhaust gas treatment apparatus shown in Figs. 3 to 5, the apparatus can be realized, while the conveyor and other structures for conveying the dust captured by the electrostatic capacitor 222 may be the same, and the Se in the combustion exhaust gas is made harmless, and modification of the existing combustion exhaust gas treatment apparatus is easy, and when newly installing this apparatus, the conventional design or equipment may be used as it is.

The result of dust collecting experiment by the electrostatic precipitator in the structure of the apparatus in Fig. 2 is described below. In the experiment, coal containing 3 mg/kg of Se was supplied into a combustion furnace at a rate of 25 kg/h, and the combustion exhaust gas exhausted from the combustion furnace at a rate of 200 $m^3$ N/h was cooled to 150°C and fed into the electrostatic precipitator. In this case, more than 99% of the dust was captured by the electrostatic precipitator, and the total amount of dust collected from the hoppers was 3.4 kg/h. The capturing amount of coarse ash B5 and fine ash B6, mean particle size, and eluting Se concentration are shown in Table 2.

## Table 2

| Collected ash<br>Item | Coarse ash B5 | Fine ash B6 |
|---|---|---|
| Capturing amount (kg/h) | 2.05 | 1.30 |
| Mean particle size of captured ash (µm) | 13 | 5.4 |
| Eluting selenium concentration in captured ash (mg/liter) | 0.26 | 0.36 |

That is, in the fine ash B6, the mean particle size was 5.4 µm, and the capturing amount was small, 1.30 kg/h, but the eluting Se concentration exceeded the standard, 0.36 mg/liter. In coarse ash B5, the mean particle size was 13 µm, the capturing amount was large, 2.05 kg/h, but the eluting Se concentration was below the standard, 0.26 mg/liter. Accordingly, it is known that the coarse ash B5 can be directly discarded. Hence, Se insoluble treatment is not needed in the coarse ash B5 which is very large in output, and it is evident that the required amount of Se elution preventive agent C and required capacity of the mixer 225 can be saved substantially.

The invention may be realized also in other various forms than the illustrated embodiments. For example, as the Se elution preventive agent, aside from $FeCl_3$ or $Fe_2(SO_4)_3$, chelating agents (e. g. Miyoshi Resin Epolus MX-7), and high polymer heavy metal capturing agents (e.g. Miyoshi Resin Epofloc L-1) can be used. The dust collecting means and sorting means of the invention are not limited to the electrostatic precipitator and single cyclone connected thereto, but the dust collecting means and sorting means of the invention may be realized, for example, by multiple cyclones.

The combustion exhaust gas treatment apparatus of the invention may be incorporated in part of the combustion exhaust gas treatment apparatus having a conventional desulfurization apparatus. For example, in embodiment 1, the desulfurization apparatus for removing sulfurous acid from the combustion exhaust gas sent by the fan 223 may be provided, for example, as in the prior art shown in Figs. 3 to 5. Besides, the conventional air heater or gas-gas heater may be used as the cooling means of the invention.

Moreover, all of the dust separated and collected by the electrostatic precipitator 222 may be treated by introducing into the mixer 225 (mixing means).

EFFECTS OF THE INVENTION

According to the combustion exhaust gas treatment apparatus of the invention, most of Se in combustion exhaust gas is cooled by the cooling means and condensed, and is removed by the dust collecting means in a state being contained in the dust. To the dust separated by the dust collecting means, Se elution preventive agent and humidifying liquid or a solution of Se elution preventive agent is added by the mixing means, and the existent form of Se in the dust is transformed into an insoluble compound. Accordingly, if the dust is discarded same as in the prior art, the Se elution standard is satisfied, and Se is made harmless easily without requiring complicated aftertreatment. Moreover, by adding the humidifying liquid and Se elution preventive agent, or spraying a solution of Se elution preventive agent to mix with the dust, and forming the dust into scale, as compared with the case of forming the dust into slurry, mixing Se insoluble treating agent, and separating into solid and liquid to discard, it does not require large scale equipment or facility such as wastewater (filtrate) treating facility or solid-liquid separator, and handling is much easier in waste disposal of dust.

Also by feeding only the dust separated and collected from the specific recovery unit at the outlet side of the combustion exhaust gas in the dust collecting means or the dust of small particle size sorted by the sorting means into the mixing means to make insoluble, the required amount of Se elution preventive agent and required capacity of the mixing means and scale forming means can be reduced, and the Se is made harmless more easily and economically.

**Claims**

**1.** Combustion exhaust gas treatment apparatus for removing harmful material, especially selenium (Se), in combustion exhaust gas (A) comprising

cooling means (221) for cooling the combustion exhaust gas (A) down to 350°C or less,

dust collecting means (222) for separating dust in the combustion exhaust gas with a plurality of recovery units (231, 232, 233, 234) arranged in the combustion exhaust gas duct from the inlet side to the outlet side, for separating and collecting dust (B1, B2, B3, B4),

mixing means (225) for adding and mixing Se elution preventive agent (C) and humidifying liquid (D), or solution of Se elution preventive agent, only to the dust (B3, B4) of small particle size collected by the recovery units (233, 234) at the outlet side of the dust collecting means (222), and

means (226) for forming scales from the dust mixed with the Se elution preventive agent and humidifying agent, or solution of Se elution preventive agent.

**2.** Combustion exhaust gas treatment apparatus for removing harmful material, especially selenium (Se), in combustion exhaust gas (A) comprising

cooling means (221) for cooling the combustion exhaust gas (A) down to 350°C or less,

dust collecting means (222) for separating dust in the combustion exhaust gas,

sorting means (251) for sorting the dust separated by the dust collecting means into a large particle size group (fraction) (B5) and a small particle size group (fraction) (B6),

mixing means (225) for adding and mixing Se elution preventive agent (C) and humidifying liquid (D), or solution of Se elution preventive agent, to the dust of the small particle size dust group (fraction) (B6), and

means (226) for forming scales from the dust mixed with the Se elution preventive agent and humidifying agent, or solution of Se elution preventive agent.

**Patentansprüche**

**1.** Vorrichtung zur Behandlung von Verbrennungsabgas für die Entfernung schädlicher Stoffe, insbesondere von Selen (Se), aus einem Verbrennungsabgas (A) umfassend

eine Kühleinrichtung (221) zum Kühlen des Verbrennungsabgases auf 350°C oder darunter,

eine Staubabscheideeinrichtung (222) zum Abscheiden von Staub aus dem Verbrennungsabgas mit einer Vielzahl von in der Abgasleitung zwischen der Einlass- und der Auslassseite vorgesehenen Abscheideeinheiten (231, 232, 233, 234) zum Abscheiden und Auffangen von Staubfraktionen (B1, B2, B3, B4),

eine Mischeinrichtung (225) zum Zugeben und Einmischen eines eine Se-Eluierung verhindernden Behandlungsmittels (C) und eines Befeuchtungsmittels (D) oder einer Lösung eines eine Se-Eluierung verhindernden Behandlungsmittels allein zu den von den Abscheideeinheiten (223, 234) auf der Auslassseite der Staubabscheideeinrichtung (222) abgeschiedenen Staubfraktionen (B3, B4), und

eine Brikettiervorrichtung (226) zur Bildung von Briketts aus dem Staub, der mit dem eine Se-Eluierung verhindernden Behandlungsmittel und dem Befeuchtungsmittel oder mit der Lösung des eine Se-Eluierung verhindernden Behandlungsmittels vermischt worden ist.

2. Vorrichtung zur Behandlung von Verbrennungsabgas für die Entfernung schädlicher Stoffe, insbesondere von Selen (Se), aus einem Verbrennungsabgas (A) umfassend

eine Kühleinrichtung (221) zum Kühlen des Verbrennungsabgases auf 350°C oder darunter,

eine Staubabscheideeinrichtung (222) zum Abscheiden von Staub aus dem Verbrennungsabgas

eine Trenneinrichtung (251) zum Auftrennen des von der Staubabscheideeinrichtung abgeschiedenen Staubs in eine Gruppe (Fraktion) (B5) gröberer Staubpartikel und eine Gruppe (Fraktion) (B6) feinerer Staubpartikel,

eine Mischeinrichtung (225) zum Zugeben und Einmischen eines eine Se-Eluierung verhindernden Behandlungsmittels (C) und eines Befeuchtungsmittels (D) oder einer Lösung eines eine Se-Eluierung verhindernden Behandlungsmittels allein zu der Gruppe (Fraktion) (B6) feinerer Staubpartikel, und

eine Brikettiervorrichtung (226) zur Bildung von Briketts aus dem Staub, der mit dem eine Se-Eluierung verhindernden Behandlungsmittel und dem Befeuchtungsmittel oder mit der Lösung des eine Se-Eluierung verhindernden Behandlungsmittels vermischt worden ist.

**Revendications**

1. Dispositif de traitement de gaz de combustion pour séparer des matériaux nocifs, en particulier du sélénium (Se), des gaz d'échappement de combustion (A), comprenant

un moyen de refroidissement (221) pour refroidir les gaz d'échappement de combustion à 350 °C ou moins,

un moyen de collecte de la poussière (222) pour séparer la poussière des gaz d'échappement de combustion comprenant une pluralité d'unités de récupération (231, 232, 233, 234) disposées dans le conduit de gaz d'échappement de combustion du côté de l'entrée jusqu'au côté de la sortie pour séparer et collecter de la poussière (B1, B2, B3, B4),

un moyen de mélange (225) pour ajouter et mélanger un agent (C) de traitement empêchent l'élution du Se et un liquide pour humidifier (D) ou une solution d'un agent de traitement empêchent l'élution du Se seulement à la poussière (B3, B4) de particules fines collectées par les unités de récupération (223, 224) disposées du côté de la sortie du moyen de collecte de la poussière (222), et

un moyen (226) de formation de briquettes de poussière mélangée avec agent de traitement empêchent l'élution du Se et un liquide pour humidifier ou une solution d'un agent de traitement empêchent l'élution du Se.

2. Dispositif de traitement de gaz de combustion pour séparer des matériaux nocifs, en particulier du sélénium (Se), des gaz d'échappement de combustion (A), comprenant

un moyen de refroidissement (221) pour refroidir les gaz d'échappement de combustion à 350 °C ou moins,

un moyen de collecte de la poussière (222) pour séparer la poussière des gaz d'échappement de combustion,

un moyen de tri (215) pour trier la poussière séparée en une groupe (fraction) (B5) de grandes dimensions de particules et une groupe (fraction) (B6) de petites dimensions de particules,

un moyen de mélange (225) pour ajouter et mélanger un agent (C) de traitement empêchent l'élution du Se et un liquide pour humidifier (D) ou une solution d'un agent de traitement empêchent l'élution du Se à la poussière de la groupe (fraction) (B6) de petites dimensions de particules, et

un moyen (226) de formation de briquettes de la poussière mélangée avec un agent de traitement empêchant l'élution du Se et un liquide pour humidifier ou une solution d'un agent de traitement empêchant l'élution du Se.

# Fig. 1

# Fig. 2

# Fig. 3

BOILER

DENITRATION

ELECTROSTATIC
PRECIPITATOR

DESULFURIZATION

HEAT
RECOVERY

REHEATING

A/H

EP

COAL

(≈0)

ASH
TREATMENT

GYPSUM

WASTEWATER

ASH DISPOSAL
YARD

RECYCLING
(CEMENT MATERIAL, ETC.)

EP 1 142 627 B1

# Fig. 4

EP 1 142 627 B1

EP 1 142 627 B1

Fig. 5

14